# EUROPÄISCHE PATENTSCHRIFT

(11) **EP 3 375 764 B1**
(45) Veröffentlichungstag und Bekanntmachung des Hinweises auf die Patenterteilung: **08.01.2020**
(21) Anmeldenummer: 18161476.9
(22) Anmeldetag: 13.03.2018
(51) Int. Cl.: C04B 5/00, C04B 5/06, C21B 3/04, C21B 3/06, C21C 1/02, C21C 5/36, C22B 5/04, C22B 5/06, C22B 5/12, F27B 3/00, F27B 3/06, F27B 3/10, C22B 5/10

(54) **VERFAHREN ZUR BEHANDLUNG METALLURGISCHER SCHLACKEN**
METHOD FOR TREATING METALLURGICAL SLAG
PROCÉDÉ DE TRAITEMENT DES LAITIERS MÉTALLURGIQUES

(30) Priorität: 15.03.2017 DE 102017105551
(43) Veröffentlichungstag der Anmeldung: 19.09.2018
(73) Patentinhaber: Scholz Austria GmbH, 1110 Wien (AT)
(72) Erfinder: Schmid, Herbert, 4621 Sipbachzell (AT); Panhofer, Harald, 4020 Linz (AT); Martinelli, Walter, 2380 Perchtoldsdorf (AT)
(74) Vertreter: HGF Europe LLP

(56) Entgegenhaltungen:
- EP-A1- 1 198 599
- EP-A1- 2 759 606
- WO-A2-02/36834
- DE-A1- 4 138 118
- DE-A1- 4 406 260
- JP-A- 2007 297 693
- US-A- 4 185 997
- US-A- 4 887 798

## Beschreibung

Die Erfindung betrifft ein Verfahren zur Behandlung von metallurgischen Schlacken und insbesondere von Schlacken aus der Stahlerzeugung.

Bei der Erzeugung von Stahl im Konverter und insbesondere im LD-Konverter wird zur Abdeckung der Stahlschmelze Schlacke verwendet bzw. entsteht diese zum Teil infolge der oxidierenden Behandlung. Es handelt sich hierbei üblicherweise um basische Schlacken auf der Basis von Kalk.

Beim Konverterabstich wird so abgestochen, dass einerseits der Stahl aus dem Konverter üblicherweise in eine Pfanne abgegossen wird, während die Schlacke in einen Schlackenbehälter abgegossen wird. Neben der Schlacke werden hierbei gewisse Mengen an Stahlschmelze mit in den Schlackenbehälter gegeben, zudem enthält die Schlacke selbst noch Eisen in Form von Eisenoxid.

Aus dem Stand der Technik ist es bekannt, die Schlacke durch Schlackenbehandlungsverfahren aufzubereiten, denn die Schlacke stellt einen wertvollen Rohstoff für die Zementherstellung dar. Hierfür wird das in der LD-Schlacke enthaltene Eisenoxid im ersten Schritt zu einem Metallbad reduziert und dieses Metallbad anschließend durch oxidierende Behandlung entphosphort. Hierbei können alternierend oxidierende und reduzierende Behandlung in ein und demselben Gefäß durchgeführt werden oder das Metall aus der reduzierenden Behandlung wird in eine Behandlungspfanne abgestochen und in diese zum oxidieren Behandlungsstand transportiert, an welchem die Entphosphorung durchgeführt wird.

Ein Verfahren zur Behandlung von Schlacke aus Konvertern ist aus der EP 2383352 A1 bekannt, bei der in einem Gefäß LD-Schlacke reduziert wird und mineralische Bestandteile, wie Kohlenstoff, Silizium und Aluminium zugegeben werden. Hierbei geht es im Wesentlichen darum, das in der Schlacke noch enthaltene Eisen, welches dort als Eisenoxid vorliegt, zurückzugewinnen und aus der Schlacke zu entfernen.

Aus der WO 2004/101828 A1 ist ein Verfahren zum Verwerten von aus der Eisenhüttenindustrie stammenden, oxidischen Eisenteilchen enthaltenen Schlacken bekannt, wobei ein Reduktionsmittel zugegeben wird und eine Reduktion der oxidischen Eisenteilchen in der Schlacke durchgeführt wird, wobei hierfür Schlacke in ein Reaktorgefäß chargiert wird und anschließend elektrisch aufgeheizt wird. Über einen längeren Zeitraum soll ein kohlenstoffhaltiges Reduktionsmittel eingeblasen werden. Nach der vollständigen Reduktion wird die Schlacke abgestochen und gegebenenfalls vorhandenes flüssiges Eisen ebenfalls bis auf eine Kohlenstoff enthaltende Resteisenschmelze.

Aus der EP 2767597 A1 ist ein Verfahren zur Reduktion von Stahlschlacke bekannt, bei der Konverterschlacke in ein entsprechendes Gefäß kontinuierlich oder intermittierend chargiert wird, wobei in dem Behandlungsgefäß eine geschmolzene Schlackenschicht auf einer schmelzflüssigen Eisenschicht vorhanden ist und das Gemenge elektrisch aufgeheizt wird und in einer nicht-oxidierenden Atmosphäre behandelt wird, wobei der Abstich des im Behandlungsgefäß entstehenden Eisens und der dort enthaltenen Schlacke diskontinuierlich erfolgt.

Ein vergleichbares Verfahren ist aus der EP 2759606 A1 bekannt, wobei dies eine Variante des zuvor genannten Verfahrens ist. Dieses schlägt vor, noch weitere Rohstoffe dem Schlackenbad zuzugeben. Dabei wird eine Vorrichtung zur reduzierenden Behandlung von metallurgischen Schlacken gezeigt, bei der die Schlacke aus einem kippbaren Aufgabegefäß in ein über elektrischen Lichtbogen geheiztes Reduktionsgefäß geleitet wird. Auch hierbei handelt es sich um einen festliegenden Elektrolichtbogenofen, in dem zur Reduktion kohlenstoffhaltiges Material eingeblasen wird.

Aus der AT 412 723 B ist ein Verfahren zur Konditionierung von Schlacken und Stäuben aus der Edelstahlherstellung bekannt. Edelstahlschlacken sind aufgrund der Beigabe von Flussspat als Schlackebildner typischerweise mit Fluorid belastet. Das zu schmelzende Material wird einem Schmelzzyklon aufgegeben, und geschmolzene Schlacke gelangt über einen Bodenauslass in eine Pfanne. Dort wird die Schlacke von Fluoriden befreit. Dazu erfolgt eine Behandlung mit Wasserdampf zur Umwandlung von Halogeniden in Oxide und Halogenwasserstoffe. Anschließend wird die so behandelte Schlacke über eine Leitung bzw. Rinne einem Induktionseisenbadreaktor zugeführt, wo sie über einem darin vorgelegten kohlestoffhaltigen Eisenbad reduziert wird. Aus der Reduktion resultierendes CO wird in der Folge durch Sauerstofflanzen nachverbrannt. Reduktion und Oxidation erfolgen somit nacheinander in ein und demselben Gefäß.

Aus der AT 412 283 B ist ein Schlackeverwertungsverfahren bekannt, bei dem in ein und demselben Reaktorgefäß eine Reduktion mittels Kohlenstoff gefolgt von einer Oxidation mittels Sauerstoff stattfinden. Reduktion und Oxidation erfolgen auch hier nacheinander in ein und demselben Gefäß.

Aus der DE 26 48 220 A1 ist ein Verfahren zur Behandlung von eisenhaltigen metallurgischen Schlacken und eine Vorrichtung zur Durchführung desselben bekannt. Dabei wird eine Schmelzschlackenpfanne mit Hochofenschlacke und Konverterschlacke beladen, zu einer Schlackenverarbeitungsfabrik transportiert, und die Schlacke in eine Schlackengiesgrube gegossen. Es schließt sich eine Sauerstoffbehandlung an, nach der die Schlacke gegebenenfalls granuliert wird.

Aus der DE 102 15 594 A1 ist ein Verfahren zur Konditionierung von flüssiger Hochofenschlacke bekannt, das in einer Anlage mit einem Behandlungsgefäß erfolgt, auf das eine Lanze gerichtet ist, und in die ein Auslass eines Speichergefäßes mündet, aus dem Zuschlagstoff beigefügt werden kann. Eine weitere Lanze ist auf die Reaktionszone des Behandlungsgefäßes gerichtet. Die behandelte Schlacke wird in eine Pfanne übergeben oder granuliert.

Aus der DE 41 38 118 A1 ist ein Einschmelzaggregat mit zwei nebeneinander angeordneten, jeweils eine Deckeleinrichtung aufweisenden Ofengefäßen bekannt. Es erfolgt ein gleichzeitiger Betrieb der Ofengefäße, wobei in einem Ofengefäß der Einschmelzvorgang erfolgt, während im anderen Ofengefäß die Schmelze gefeint und überhitzt wird. Bei einer Ausführungsform der Vorrichtung sind die Ofengefäße auf einem Drehteller angeordnet und wechseln jeweils nach Beendigung des Einschmelzvorgangs ihre Position gegenüber den fest installierten Deckeleinrichtungen, die zumindest teilweise zur Aufnahme von Einsatzmaterial ausgebildet sind. Bei einer weiteren Ausführungsform sind die Ofengefäße fest installiert und die Deckeleinrichtungen diesen gegenüber verschwenkbar angeordnet.

Aus der US 4,887,798 A ist eine Vorrichtung zum Detektieren von in einem Fluß einer Metallschmelze mitfließender Schlacke bekannt, wobei ein Meßaufnehmer eingesetzt wird, der den Flußquerschnitt der Metallschmelze berührungslos umschließt. Der Meßaufnehmer besteht aus einer Sende- und einer Empfangsspule, denen eine Referenzspule zugeordnet ist. Die Spulen sind in einer ringförmigen antimagnetischen Kassette untergebracht. Diese umgibt die Spulen mit einem Schutzmantel, der elektromagnetische Felder verändert und gegen mechanische Beanspruchungen beständig ist. Dadurch wird das Meßsignal nur vernachlässigbar gering durch Änderungen in der Permeabilität der Bodenplatte beeinflußt.

Um die in einem Hüttenwerk anfallenden Schlacken und Reststoffe rentabel zu verwerten, wird bei einem Verfahren zur Schlackenkonditionierung und zum Hüttenreststoffrecycling in der Eisenhüttenindustrie gemäß der WO 00/75385 A1 wie folgt vorgegangen: Zusammenführen und Behandeln der Schlacke mindestens eines Abstiches eines Hochofens in flüssigem Zustand und von sonstigen Hüttenschlacken aus einem Stahlwerk in einem Schlackenkonditioniergefäss; Einbringen von Hüttenreststoffen, vorzugsweise aller Hüttenreststoffe, sowie von Schlacke von einer Roheisenvorbehandlung in das Schlackenkonditioniergefäss; Einblasen von Reduktionsmittel in das Schlackenkonditioniergefäss zum Ausreagieren der eingebrachten Stoffe; Einbringen von Kohlenstoff zum Auflegieren des reduzierten Eisens aus den eisenhältigen Reststoffen; Rühren der im Schlackenkonditioniergefäss enthaltenen Schmelzen durch Einblasen von Spülgas; Aufheizen der im Schlackenkonditioniergefäss enthaltenen Schmelzen auf eine gewünschte Temperatur bzw. Halten auf einer bestimmten Temperatur; Einstellen einer gewünschten Zusammensetzung der im Schlackenkonditioniergefäss enthaltenen Schlackenschmelze durch Zusetzen von Zusatzstoffen; Abstechen der konditionierten Schlackenschmelze und schlackefreies Abstechen der eisenhältigen Schmelze.

Aus dem genannten Stand der Technik ist es somit bekannt, das in der LD-Schlacke enthaltene Eisenoxid in einem ersten Schritt zu flüssigem Eisen zu reduzieren. Dieses Metallbad wird anschließend noch einer Entphosphorung unterzogen. Hierbei gibt es zwei Varianten, wobei bei einer ersten Variante eine alternierende Behandlung reduzierend und anschließend oxidierend im selben Gefäß durchgeführt wird, so wie es auch bei der Edelstahlerzeugung im Elektrolichtbogenofen üblich ist.

Die zweite Variante sieht vor, das Metall aus der reduzierenden Behandlung in eine Behandlungspfanne abzustechen und diese zu einem oxidierenden Behandlungsstand zu transportieren, an welchem die Entphosphorung durchgeführt wird.

Bei den Verfahren nach dem Stand der Technik ist von Nachteil, dass bei der Behandlung in einem einzigen Behandlungsgefäß ein sehr hoher durchgehender Reduktionsgrad erreicht werden muss. Ein ständiger Wechsel der Atmosphäre von Reduzieren zu Oxidieren ist ungünstig, denn es führt einerseits zu vermindertem Ausbringen und erhöhten Betriebsmittelverbräuchen.

Bei der Variante, bei der das gewonnene flüssige Eisen anschließend entphosphort wird, besteht ein erhöhter Transport- und Logistikaufwand aufgrund zweier örtlich getrennter Behandlungsanlagen. Die Möglichkeit, das heizwertreiche Abgas aus der reduzierenden Stufe als oxidierendes Heizgas in der zweiten Stufe zu verwenden, kann je nach Entfernung sehr aufwändig bis unmöglich sein. Eine Folge dieser Umstände sind erhöhte Investitions- und Betriebskosten.

Aufgabe der Erfindung ist, ein Verfahren zur Behandlung von metallurgischen Schlacken mit geringerem Investitionsaufwand und geringeren Betriebskosten zu schaffen.

Die Aufgabe wird mit einem Verfahren mit den Merkmalen des Anspruchs 1 gelöst.

Vorteilhafte Weiterbildungen sind in den hiervon abhängigen Unteransprüchen gekennzeichnet.

Es ist eine weitere Aufgabe, eine Vorrichtung zum Durchführen des Verfahrens zu schaffen.

Die Aufgabe wird mit einer Vorrichtung mit den Merkmalen des Anspruches 12 gelöst.

Vorteilhafte Weiterbildungen sind in den hiervon abhängigen Unteransprüchen gekennzeichnet.

Die Erfindung sieht vor, ein gemeinsames Gefäß zu schaffen, das durch zwei Trennwände in drei Kammern unterteilt ist. Die drei Kammern sind ein neutraler Vorherd, eine reduzierende erste, sowie eine oxidierende zweite Kammer.

Die Ausführung der Verbindung zwischen den einzelnen Kammern ist insbesondere absperr- bzw. regelbar, wobei ein vollständig kommunizierendes Gefäß bzw. vollständig kommunizierende Kammern nicht bevorzugt sind.

Bevorzugt wird, dass eine von den Flüssigkeitsspiegeln unabhängige Einstellung des Materialübertrages zwischen den einzelnen Kammern vorgenommen werden kann.

Vorzugsweise besitzt der Vorherd Brenner genügender Leistung, so dass in den Vorherd eingebrachte Schlacke und gegebenenfalls mitfließender Reststahl sowie anfallende Bären oder Schalen dem Prozess zugeführt und in den flüssigen Zustand überführt werden können.

In einer bevorzugten Ausführungsform werden im oxidierenden Teilschritt feste LD-Schlacke als Entphosphorungsmittel sowie Erz oder Zunder als Sauerstofflieferant zugeführt, wobei der Hauptsauerstoffeintrag aus der überstöchiometrisch betriebenen Verbrennung der in der Reduktionsstufe entstandenen Abgase stammt.

Hierbei ist von Vorteil, dass das Anlagenkonzept minimale Investitions- und Betriebskosten verursacht, sowie ein optimiertes Ausbringen bei minimalem Logistikaufwand besitzt.

Darüber hinaus wird ein kontinuierlicher Betrieb der Aufbereitungsanlage ermöglicht, da der chargenweise Anfall der LD-Schlacke vom restlichen Aufbereitungsprozess entkoppelt wird. Darüber hinaus können die heizwertreichen Abgase aus dem reduzierenden Teil idealerweise und mit kurzen Wegen als Heizgas in der oxidierenden Prozessphase und/oder im Vorherd verwendet werden.

Grundsätzlich ist vorgesehen, flüssige Schlacke sowie möglicherweise entstehende Bären und Schalen in den Vorherd einzukippen, wobei das Ziel ist, den Schlackenkübel vollständig zu entleeren. Möglicherweise mitgelaufener Reststahl gelangt ebenfalls in den Vorherd, wobei aufgrund der Schwere bzw. Dichte eine Trennung zwischen Schlacke und Stahl erfolgt. Wie im Elektrolichtbogenofen üblich, werden sogenannte VLB (Virtual Lance Burner) zusätzlich verwendet, um feste Anteile aufzuschmelzen. Hierbei wird insbesondere auch darauf geachtet, den mitgelaufenen Reststahl im flüssigen Aggregatzustand zu halten. Der Vorherd dient hierbei einerseits dem Aufschmelzen allen im Vorherd befindlichen Materials und der Umwandlung der diskontinuierlichen Schlackenchargierung in einen kontinuierlichen Prozess. Hierzu werden Schlacke und Reststahl in die zweite Prozessstufe mittels regelbarer Absperreinrichtungen überführt.

In der zweiten Kammer erfolgt die Zugabe von Schlackenmodifikatoren sowie das Einbringen eines kohlenstoffhaltigen Reduktionsmittels durch Einblasen. Sofern noch darüber hinausgehende Energie benötigt wird, wird diese über Elektroden analog zum Elektrolichtbogenofen eingebracht.

Nach einer ausreichenden Behandlung wird das Metallprodukt von der zweiten Kammer in die dritte Kammer überführt, in welcher die Oxidation erfolgt, wobei feste Sauerstoffträger sowie LD-Schlacke zugegeben werden, um eine Entphosphorung zu erzielen.

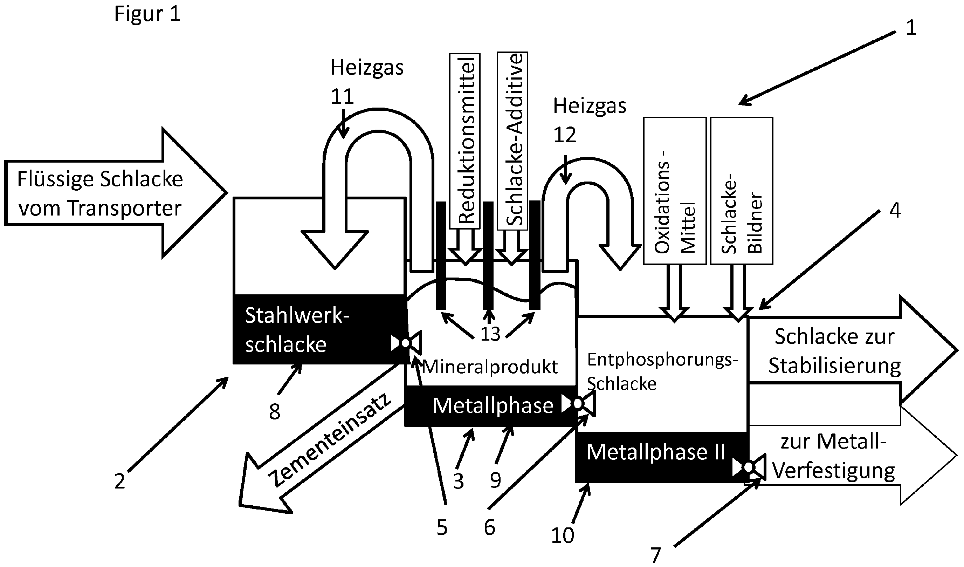

Die Erfindung wird anhand einer Zeichnung beispielhaft erläutert, wobei die einzige Figur stark schematisiert die erfindungsgemäße Vorrichtung mit den Stoff- und Massenströmen zeigt.

Die erfindungsgemäße Vorrichtung 1 zur Behandlung metallurgischer Schlacken besitzt einen Vorherd 2, eine Reduktionskammer 3 und eine Oxidationskammer 4. Der Vorherd 2, die Reduktionskammer 3 und die Oxidationskammer 4 bilden eine bauliche Einheit, wobei die Kammern voneinander getrennt sind.

Zwischen den Kammern sind regelbare Absperrvorrichtungen 5, 6, 7 angeordnet, wobei eine erste regelbare Absperrvorrichtung 5 zwischen dem Vorherd und der reduzierenden Kammer sowie zwischen dieser und der oxidierenden Kammer eine zweite Absperrvorrichtung 6 vorhanden ist. Die oxidierende Kammer 4 besitzt ebenfalls eine regelbare Absperrvorrichtung 7.

Vorzugsweise sind die Schmelzesohle 8 des Vorherds und/oder die Schmelzesohle 9 der reduzierenden Kammer und/oder die Schmelzesohle 10 der oxidierenden Kammer 4 geneigt ausgebildet. Insbesondere besitzen diese eine Neigung von 2-5° oder mehr.

Die Schmelzesohlen 8, 9 und 10 sind dabei vorzugsweise so angeordnet, dass ein Höhenunterschied zwischen dem Vorherd 2 und der Kammer 3 und der Kammer 4 besteht.

Vorzugsweise besitzen der Vorherd 2, die reduzierende Reduktionskammer 3 und die oxidierende Kammer 4 die Absperrorgane 5, 6 und 7 derart, dass diese außerhalb des Kammerraumes angeordnet sind, wobei vorzugsweise alle Kammern, jedoch mindestens eine Kammer über eine induktive Schlackenerkennung verfügt.

Die Absperrorgane und die Trennungen zwischen den Kammern sind so ausgebildet, dass eine atmosphärische Trennung gewährleistet ist.

Der Vorherd kann Heizbrenner zum Verbrennen des heizwertreichen Gases aus der zweiten Prozessstufe besitzen, zusätzlich können Erdgasbrenner und sogenannte VLB vorhanden sein. Die Temperatur im Vorherd wird vorzugsweise durch die Brenner so eingestellt, dass sie zwischen 1450 und 1550°C, in jedem Fall aber größer 1450°C beträgt. In der reduzierenden Kammer werden die Temperaturen vorzugsweise auf größer 1500°C, weiter bevorzugt größer 1600°C eingestellt, wobei die Temperatur durch Einblasen eines C-haltigen Reduktionsmittels erzielt wird und zusätzliche Energie über Elektroden eingebracht wird.

In der oxidierenden Kammer 4 wird die Temperatur vorzugsweise auf oberhalb 1450°C und insbesondere auf 1450°C bis 1550°C eingestellt. Um die Temperaturen sicherzustellen, können überstöchiometrisch betriebene Brenngas-Sauerstoffbrenner verwendet werden, wobei vorzugsweise als Brenngas das heizwertreiche Prozessgas aus der Reduktionsstufe als Brenngas zu den Brennern geführt ist.

Selbstverständlich können der Vorherd 2 und die oxidierende Kammer 4 auch mit Erdgas beheizt werden.

Der Vorherd 2, die Reduktionskammer 3 und die oxidierende Kammer 4 können insbesondere unterschiedliche Größen besitzen, so kann insbesondere der Vorherd deutlich größer, insbesondere drei- bis zehnmal größer als die Reduktionskammer 3 sein und die Reduktionskammer 3 auch größer als die oxidierende Kammer 4.

Im Prozessschritt der Reduktion entsteht ein brennbares kohlenstoffhaltiges Gas, so dass von der Kammer 3 Heizgasleitungen 11, 12 zum Vorherd 2 und zur oxidierenden Kammer 4 geführt sind und mit dort vorhandenen Brennern, gegebenenfalls unter Zwischenschaltung von Druckwandlern und gegebenenfalls Mischarmaturen, verbunden sind.

Die Reduktionskammer 3 enthält neben der regelbaren Absperrvorrichtung 5 vom Vorherd und 6 zur Oxidationskammer 4 eine zusätzliche Absticheinrichtung (nicht gezeigt), mit der die Schlacke nach erfolgter Reduzierung abgestochen werden kann, so dass über die regelbare Absperrvorrichtung nach erfolgter Reduzierung die vorhandene Metallphase in die oxidierende Kammer überführt werden kann und die reduzierte Schlacke getrennt abgezogen werden kann.

Zudem umfasst die Kammer 3 zumindest Zugangsöffnungen oder Zuführleitungen (nicht gezeigt) für Reduktionsmittel und gegebenenfalls Schlackeadditive. Ferner sind Elektroden 13 vorhanden, mit denen nach Art eines Elektrolichtbogenofens Energie einbringbar ist.

Nachfolgend wird das erfindungsgemäße Verfahren erläutert.

Zunächst wird ein Schlackenkübel mit flüssiger Schlacke sowie möglicherweise entstehenden festen Agglomerationen (Bären und Schalen) mit einer an sich üblichen Kippgeschwindigkeit, insbesondere Kippgeschwindigkeiten kleiner 1 Minute in den Vorherd 2 eingefüllt. Hierbei ist das Ziel, dass der Schlackenkübel vollständig entleert wird und gegebenenfalls aus dem Kübel herausstürzende Bären dem Prozess zugeführt werden.

Bevorzugt sind die Öffnungen oder die Öffnung zur Aufnahme der Schlacke des Vorherdes 2 mit Deckeln versehen, um thermische Verluste so gering wie möglich zu halten. Im Vorherd 2 findet zunächst eine Schwere- bzw. Dichtetrennung zwischen der Schlacke und möglicherweise aus dem Schlackenkübel mitgelaufenem Reststahl statt.

Die flüssige, schwerere Metallphase akkumuliert dabei am Gefäßboden und insbesondere am angeschrägten Gefäßboden. Der Vorherd wird vorzugsweise permanent mit heizwertreichem Gas aus der zweiten Prozessstufe beheizt, wobei zusätzlich und wenn notwendig, eine Energiezufuhr über sogenannte VLB (Virtual Lance Burner) möglich ist, um eingebrachte feste Anteile sicher aufzuschmelzen.

Die VLB sind dabei analog zu ihrem Gebrauch in Elektrolichtbogenöfen vorhanden. Über die Verbrennung des heizwertreichen Gases und gegebenenfalls die Aktivierung der VLB wird eine Prozesstemperatur größer 1550°C eingestellt, um sicherzustellen, dass der mitgelaufene Reststahl im flüssigen Aggregatzustand verbleibt.

Die Schlacke und gegebenenfalls der Reststahl verbleiben so lange im Vorherd 2, bis die zweite Stufe zur Aufnahme von beiden bereit ist, insbesondere nach Abschluss eines zuvor durchgeführten Reduktionsprozesses.

Anstelle einer diskontinuierlichen Zuführung kann auch eine kontinuierliche Zuführung mit der regelbaren Absperreinrichtung 5 durchgeführt werden, wobei am Boden befindlicher Reststahl und darüber befindliche Schlacke auch getrennt voneinander über eine Mehrzahl von regelbaren Absperreinrichtungen 5 der nachfolgenden Kammer 3 zuführbar sind. Insbesondere wird hierdurch die Reaktionsgeschwindigkeit kontrolliert.

Die Schmelzesohle 8 des Vorherdes, also der Boden des Vorherdes 2, ist in einer geeigneten Höhe über der Schmelzesohle 9 der zweiten Kammer 3 angeordnet. Dies ermöglicht, den Reststahl von einem höheren Niveau auf ein tieferes Niveau laufen zu lassen, zudem ist es hierdurch möglich, die LD-Schlacke aus dem Vorherd immer in das reduzierte mineralische Produkt in der Reduktionskammer 3 direkt einzuleiten, um Reaktionen zwischen der eisenoxidreichen Schlacke und dem kohlenstoffreichen Metallbad in der Reduktionskammer 3 zu verhindern. Vorzugsweise wird die Schlacke im Vorherd auf möglichst hohe Temperaturen erwärmt, um einen Teil der für die Reduktion notwendigen Energie, da diese endotherm verläuft, in Form von fühlbarer Wärme (Enthalpie) einzubringen.

Sofern die Reduktionskammer 3 zur Aufnahme von Schlacke und gegebenenfalls Reststahl bereit ist, werden die absperrbaren Absperreinrichtungen 5 geöffnet, so dass die Schlacke in die Reduktionskammer 3 läuft, wobei die Schlacke in die Reduktionskammer 3 so abgestochen wird, dass sie keinen Kontakt mit dort vorhandener Restmetallschmelze hat, sondern ein Restschlackebad sich zwischen der dort vorhandenen Reststahlschmelze und der neu einlaufenden Schlacke befindet. Zudem wird eine regelbare Absperreinrichtung 5 in der Nähe der Badsohle 8 des Vorherdes geöffnet, so dass dort vorhandener Reststahl in die noch vorhandene Metallschmelze in der Reduktionskammer 3 einlaufen kann. Nachdem die Reduktionskammer 3 auf ein vorgegebenes gewünschtes Maß gefüllt ist, können Schlackenmodifikatoren, wie Quarzsande, Aluminiumoxid und sonstige geeignete Reststoffe aus der Metallindustrie, wie Aluminiumkrätze, zugefügt werden.

Diese Schlackenmodifikatoren erhalten die Fließfähigkeit der Schlacke auch nach dem Reduktionsprozess, der dazu führt, dass die Schlacke von vorhandenem Eisen und gegebenenfalls Manganoxid gereinigt wird.

Andererseits wird die chemische Zusammensetzung des entstehenden Mineralprodukts, also der umgewandelten Schlacke, eingestellt. Insbesondere wird die chemische Zusammensetzung so eingestellt, dass die erstarrte Schlacke nach dem Abstich der Weiterverarbeitung, insbesondere in der Zementindustrie, zugeführt werden kann. Hierzu ist es notwendig, die Gehalte an Calcium, Aluminium und Silizium so einzustellen, dass sich hydraulische Calciumaluminate, Calciumsilikate und Calciumaluminiumsilikate bilden. Dementsprechend wird die nach dem Abstich erstarrte Schlacke zu sogenannten Schlacke- bzw. Hochofenzementen, insbesondere durch Feinvermahlen, umgewandelt.

Nachdem die Schlackenmodifikatoren zugegeben sind, wird anschließend ein kohlenstoffhaltiges Reduktionsmittel eingebracht. Als kohlenstoffhaltiges Reduktionsmittel sind pulverförmige oder gasförmige Kohlenstoffträger und auch Mischungen hieraus geeignet. Diese werden in einem überstöchiometrischen Ausmaß eingeblasen, und insbesondere direkt in die Schlacke eingeblasen. Ein überstöchiometrisches Ausmaß ist vorteilhaft, um den Heizwert sowie die anfallende Menge des entstehenden Prozessgases, welches zur Beheizung des Vorherdes und der Oxidationsstufe verwendet wird, möglichst hoch zu halten. Ist die Energie nicht ausreichend, um entsprechend die vorgegebene Temperatur zu halten, kann die Restenergie über Elektroden analog zum Elektrolichtbogenofen über Lichtbogenbildung eingebracht werden.

Anschließend wird die Reduktionsbehandlung für eine vorbestimmte Zeit durchgeführt, wobei die Höhe des Metallbades und des Schlackenbades in der Reduktionskammer 3 über handelsübliche Messsysteme erfasst wird, um einen optimalen Prozessablauf zu gewährleisten. Hierzu gehört insbesondere die Unterbrechung der Zufuhr von Schlacke in die Kammer 3 aus dem Vorherd und/oder das Öffnen der Abstechöffnung für die ausreichend reduzierte Schlacke, sobald diese einen definierten Höchststand erreicht hat.

Das Mineralprodukt, also die reduzierte Schlacke, wird über ein in einer geeigneten Höhe unterhalb der Badsohle 8 des Vorherdes 2 und oberhalb des maximalen Badspiegels des Metallbades in der Reduktionskammer 3 angeordnete, verschließbare, in den Seitenwänden angeordnete Abstichöffnung (nicht gezeigt) abgestochen. Hierbei erfassen die Messsysteme die Badspiegeländerungen, so dass der Abstich des Mineralproduktes abgebrochen wird, bevor atmosphärische Luft in das Ofengefäß eintreten kann. Zudem ist, wie bereits erwähnt, ein Vorhandensein von restlichem Mineralprodukt zur Abschirmung des vorhandenen Restmetallbades vor Schlacke aus dem Vorherd sinnvoll.

Ferner wird mit dem Messsystem sichergestellt, dass die Zufuhr von Schlacke in die Kammer 3 unterbrochen wird und das Metallprodukt aus der Reduktion über die regelbare Absperreinrichtung in die Kammer 4 überführt wird, sobald der Badspiegel der Metallschmelze in der Reduktionskammer 3 eine geeignete Höhe erreicht hat. Aufgrund der Verwendung von marktüblichen Sensoren wird der Mitlauf von Mineralprodukt aus der Kammer 3 in die Kammer 4 sowie der Eintritt von oxidierender Atmosphäre aus der Oxidationskammer 4 in die Reduktionskammer 3 vermieden.

Vorteilhafterweise ist die Badsohle 9 des Reduktionsgefäßes 3 oberhalb des maximalen Badspiegels des Oxidationsgefäßes 4 angeordnet, so dass hierdurch ein Freilaufausguss realisiert wird.

Nachdem die ausreichende Reduktion festgestellt ist und insbesondere, abhängig von der Masse der eingelegten Schlacke aus dem Vorherd in die Reduktionskammer 3, eine ausreichende Prozesszeit abgelaufen ist, wird, wie bereits erwähnt, das Mineralprodukt seitlich abgestochen, während das resultierende Metallprodukt in schmelzflüssiger Form in die Oxidationskammer 4 abgestochen wird. Dem schmelzflüssigen Metallprodukt werden hier feste Sauerstoffträger zugegeben. Geeignete feste Sauerstoffträger sind beispielsweise Eisenoxide aus Hüttenreststoffen oder Erze zur Temperaturkontrolle, wobei der Silizium-Mangan-Phosphor- und Chromabbrand exotherm sind.

Zudem wird feste LD-Schlacke zugegeben, bei der die Phosphoraufnahmekapazität nicht ausgenutzt ist, wobei vorgeschmolzenes Material im Gegensatz zu normalen Schlackenbildnern leichter aufschmilzt. Als Beheizung wird in erster Linie und vorzugsweise das heizwertreiche Prozessgas aus der Reduktionsstufe in der Reduktionskammer 3 verwendet. Notwendige Reste können bei der Verbrennung dieses Brenngases dadurch bereitgestellt werden, dass das Brenngas überstöchiometrisch mit Sauerstoff verbrannt wird. Der Gasraum und die Anordnung der Brenner in der Oxidationsstufe werden so bemessen, dass die über die Verbrennung der Prozessgase aus dem Reduktionsprozess eingebrachte Energie möglichst vollständig auf die Schlacke in der Oxidationsstufe übertragen wird. Nach der ausreichenden Oxidation und insbesondere Entphosphorung des schmelzflüssigen Metallprodukts in der Oxidationskammer 4 werden das Metallprodukt und die Schlacke aus dem Gefäß durch eine oder je eine regelbare Absperrvorrichtung und Trennung der beiden Fraktionen in einem direkt an das Gefäß angeschlossenen Schlackenwehr abgestochen.

Hierbei ist von Vorteil, dass durch die räumlich enge Anordnung und insbesondere bauliche Einheit der drei Kammern eine kompakte und sichere Prozessführung mit kurzen Wegen auch für das zu verwendende Heizgas realisiert wird und auch ein thermischer Verbund erreicht wird, der zu optimalen Ergebnissen führt. Zudem kann ein an sich diskontinuierlicher Prozess in einen weitgehend kontinuierlichen Prozess überführt werden. Hierzu sind die Kammergrößen entsprechend angepasst und insbesondere die Vorherdgröße deutlich über der Größe der weiteren Kammern.

### Bezugszeichen

- 1: Vorrichtung
- 2: Vorherd
- 3: Reduktionskammer
- 4: Oxidationskammer
- 5: Absperrvorrichtung
- 6: Absperrvorrichtung
- 7: Absperrvorrichtung
- 8: Schmelzesohle
- 9: Schmelzesohle
- 10: Schmelzesohle
- 11: Heizgasleitung
- 12: Heizgasleitung
- 13: Elektrode

## Patentansprüche

1. Verfahren zur Behandlung metallurgischer Schlacken, wobei eine Vorrichtung (1) verwendet wird, die in einen Vorherd (2), eine Reduktionskammer (3) und eine Oxidationskammer (4) unterteilt ist, wobei flüssige Schlacke sowie möglicherweise feste Agglomerate und Reststahl in den Vorherd (2) eingefüllt werden und dort auf einer vorbestimmten Temperatur gehalten oder auf diese gebracht und gehalten werden und die Schlacke und der Reststahl so lange im Vorherd (2) belassen werden, bis die Reduktionskammer (3) zur Aufnahme von Material bereit ist und anschließend Schlacke und ggf. Reststahl in die Reduktionskammer (3) überführt werden und in der Reduktionskammer (3) eine Reduktion durchgeführt wird, wobei die Schlacke mit einem Reduktionsmittel behandelt wird, sodass Metalloxide reduziert werden und sich am Boden einer Schmelzesohle (9) als Metallschmelze sammeln und die reduzierte Schlacke nach erfolgter Reduktion abgestochen wird und der Weiterverarbeitung als hydraulisches Bindemittel zugeführt wird und die entstandene Metallschmelze der Oxidationskammer (4) zugeführt wird und in der Oxidationskammer (4) mit Oxidationsmitteln versetzt und oxidiert wird, um Begleitmetalle aus der Metallschmelze zu entfernen und in einer in der Oxidationskammer (4) vorhandenen Schlacke zu binden, wobei die Temperatur im Vorherd (2) größer 1.450°C eingestellt wird, in der Reduktionskammer (3) eine Prozesstemperatur >1.500°C eingestellt und gehalten wird, um sicherzustellen, dass der mitgelaufene Reststahl im flüssigen Aggregatzustand verbleibt und feste Agglomerationen aufgeschmolzen werden, und in der Oxidationskammer (4) die Temperatur auf oberhalb 1.450°C eingestellt wird, wobei in der Reduktionskammer (3) ein Restschlackebad der auf einer dort vorhandenen Restmetallschmelze verbliebenen reduzierten Schlacke verbleibt und nicht abgestochen wird und die LD-Schlacke aus dem Vorherd (2) in die reduzierte Schlacke in der Reduktionskammer (3) eingeleitet wird, um Reaktionen zwischen der eisenoxidreichen Schlacke und dem kohlenstoffreichen Metallbad in der Reduktionskammer zu unterbinden.

2. Verfahren nach Anspruch 1,
**dadurch gekennzeichnet,**
**dass** der Vorherd (2) mit heizwertreichem Gas aus der Reduktionsstufe beheizt wird, wobei, wenn notwendig, eine Energiezufuhr über sogenannte VLB erfolgt, um eingebrachte feste Anteile sicher aufzuschmelzen.

3. Verfahren nach einem der vorhergehenden Ansprüche,
**dadurch gekennzeichnet,**
**dass** in der Reduktionskammer (3) Schlackenmodifikatoren, wie z.B. Quarzsand, Aluminiumoxid und geeignete Reststoffe aus der Metallindustrie, wie z.B. Aluminiumkrätze, zugeführt werden.

4. Verfahren nach einem der vorhergehenden Ansprüche,
**dadurch gekennzeichnet,**
**dass** die chemische Zusammensetzung der reduzierten Schlacke durch Zugabe von Schlackenmodifikatoren in der Reduktionskammer (3) so eingestellt wird, dass die erstarrte Schlacke nach dem Abstich der Weiterverarbeitung als hydraulisches Bindemittel zugeführt werden kann, wobei die Gehalte an Calcium, Aluminium und Silizium so eingestellt werden, dass sich hydraulische Calciumaluminate, Calciumsilikate und Calciumaluminatsilikate bilden.

5. Verfahren nach einem der vorhergehenden Ansprüche,
**dadurch gekennzeichnet, dass** in der Reduktionskammer (3) ein kohlenstoffhaltiges Reaktionsmittel eingebracht wird, wobei das kohlenstoffhaltige Reduktionsmittel pulverförmig oder gasförmig sein kann oder eine Mischung aus pulver- und gasförmigen Reduktionsmitteln ist.

6. Verfahren nach einem der vorhergehenden Ansprüche,
**dadurch gekennzeichnet,**
**dass** das kohlenstoffhaltige Reduktionsmittel in einem überstöchiometrischen Ausmaß eingeblasen wird.

7. Verfahren nach einem der vorhergehenden Ansprüche,
**dadurch gekennzeichnet,**
**dass** bei Bedarf Energie über Elektroden über Lichtbogen in die Reduktionskammer (3) eingebracht wird.

8. Verfahren nach einem der vorhergehenden Ansprüche,
**dadurch gekennzeichnet,**
**dass** nach Beendigung der Reduktion des mineralischen Schlackenprodukts seitlich abgestochen wird, während das resultierende Metallprodukt in schmelzflüssiger Form in die Oxidationskammer (4) abgestochen wird, wobei dem schmelzflüssigen Metallprodukt in der Oxidationskammer (4) feste Sauerstoffträger zugegeben werden, wie Eisenoxide aus Hüttenreststoffen oder Erze zur Temperaturkontrolle, wobei vorzugsweise zusätzlich feste LD-Schlacke zugegeben wird, bei der die Phosphoraufnahmekapazität noch nicht ausgenutzt ist.

9. Verfahren nach einem der vorhergehenden Ansprüche,
**dadurch gekennzeichnet,**
**dass** die Temperatur im Vorherd (2) auf einen Bereich zwischen 1.450°C und 1.550°C eingestellt wird und die Temperaturen in der Reduktionskammer (3) auf >1.600°C eingestellt werden, und in der Oxidationskammer (4) die Temperatur auf 1.450°C bis 1.550°C eingestellt wird.

10. Vorrichtung zur Behandlung metallurgischer Schlacken,
**dadurch gekennzeichnet,**
**dass** die Vorrichtung (1) zur Behandlung metallurgischer Schlacken einen Vorherd (2), eine Reduktionskammer (3) und eine Oxidationskammer (4) besitzt, wobei der Vorherd (2) die Reduktionskammer (3) und die Oxidationskammer (4) eine bauliche Einheit bilden und die Kammern voneinander getrennt sind,
wobei zwischen den Kammern regelbare Absperrvorrichtung (5, 6, 7) angeordnet sind, wobei erste regelbare Absperrvorrichtungen (5) zwischen der Reduktionskammer (3) und der Oxidationskammer (4) und zweite Absperrvorrichtungen (6) zwischen der Reduktionskammer (3) und der Oxidationskammer (4) vorhanden sind, wobei der Vorherd (2) die Reduktionskammer (3) und die Oxidationskammer (4) die Absperrorgane (5, 6, 7) derart besitzen, dass diese außerhalb des Kammerraums angeordnet sind.

11. Vorrichtung nach Anspruch 10,
**dadurch gekennzeichnet,**
**dass** mindestens eine Kammer, vorzugsweise alle Kammern (2, 3, 4) über eine induktive Schlackenerkennung verfügen.

12. Vorrichtung nach Anspruch 10 oder 11,
**dadurch gekennzeichnet,**
**dass** der Vorherd (2) und die Oxidationskammer (4) Heizbrenner zum Verbrennen des heizwertreichen Gases aus der Reduktionsstufe besitzen, wobei zusätzlich Erdgasbrenner und/oder sogenannte Virtual Lance Burners vorhanden sein können.

13. Vorrichtung nach einem der Ansprüche 10 bis 12,
**dadurch gekennzeichnet,**
**dass** der Vorherd (2), die Reduktionskammer (3) und die Oxidationskammer (4) unterschiedliche Größen besitzen, wobei der Vorherd (2) größer, vorzugsweise 3 bis 10 mal größer als die Reduktionskammer (3) ist und die Reduktionskammer (3) größer ist als die Oxidationskammer (4).

14. Vorrichtung nach einem der Ansprüche 10 bis 13,
**dadurch gekennzeichnet,**
**dass** die Schmelzesohle (8) des Vorherdes (2) und/oder die Schmelzesohle (9) der Reduktionskammer (3) und/oder die Schmelzesohle (10) der Oxidationskammer (4) geneigt ausgebildet sind, wobei die Neigung zu einem auslauf- oder abstichseitigen Ende hin abfällt, insbesondere mit 2-5° oder mehr, wobei ein Höhenunterschied zwischen dem Vorherd (2) und der Reduktionskammer (3) und der Oxidationskammer (4) derart besteht, dass die Schmelzesohle (8) des Vorherdes (2) höher angeordnet ist als die Schmelzesohle (9) der Reduktionskammer (3) und die Schmelzesohle (9) der Reduktionskammer (3) höher angeordnet ist als die Schmelzesohle (10) der Oxidationkammer (4).

15. Vorrichtung nach einem der Ansprüche 10 bis 14,
**dadurch gekennzeichnet,**
**dass** von der Reduktionskammer (3) Heizgasleitungen (11, 12) zum Vorherd (2) und zur Oxidationskammer (4) geführt sind und mit dort vorhandenen Brennern, ggf. unter Zwischenschaltung von Druckwandlern und/oder Mischarmaturen, verbunden sind.

16. Vorrichtung nach einem der Ansprüche 10 bis 15,
**dadurch gekennzeichnet,**
**dass** die Reduktionskammer (3) neben der regelbaren Absperrvorrichtung (5) vom Vorherd (2) und der regelbaren Absperrvorrichtung (6) zur Oxidationskammer (4) eine zusätzliche Absticheinrichtung besitzt, mit der reduzierte Schlacke seitlich abgestochen werden kann.

## Claims

1. A method for treating metallurgical slags using a device (1) which is divided into a forehearth (2), a reduction chamber (3) and an oxidation chamber (4), wherein liquid slag as well as possibly solid agglomerates and residual steel are filled into the forehearth (2) and maintained there at a predetermined temperature or brought thereto and maintained, and the slag and the residual steel are left in the forehearth (2) until the reduction chamber (3) is ready to receive material and subsequently slag and optionally residual steel are conveyed into the reduction chamber (3) and a reduction is carried out in the reduction chamber (3), wherein the slag is treated with a reducing agent, so that metal oxides are reduced and collect at the bottom of a melt base (9) as a metal melt and the reduced slag is tapped off after reduction has taken place and is supplied to further processing as a hydraulic binder and the resulting metal melt is supplied to the oxidation chamber (4) and is mixed with oxidizing agents and oxidized in the oxidation chamber (4) in order to remove accompanying metals from the metal melt and to bind them in a slag present in the oxidation chamber (4), the temperature in the forehearth (2) being higher than 1,450°C, a process temperature of >1,500°C is set and maintained in the reduction chamber (3) to ensure that the entrained residual steel remains in the liquid aggregate state and that solid agglomerations are melted, and in the oxidation chamber (4) the temperature is set to above 1,450°C, wherein in the reduction chamber (3) a residual slag bath, of the reduced slag remained on a residual metal melt present there, remains and is not tapped and the LD slag is introduced from the forehearth (2) into the reduced slag in the reduction chamber (3) in order to prevent reactions between the slag rich in iron oxides and the high-carbon metal bath in the reduction chamber.

2. The method according to claim 1,
**characterized in that**
the forehearth (2) is heated with high-calorific gas from the reduction stage, with energy being supplied, if necessary, via so-called VLBs in order to reliably melt introduced solid fractions.

3. The method according to any of the preceding claims,
**characterized in that**
slag modifiers, such as quartz sand, aluminum oxide and suitable residues from the metal industry, such as aluminum dross, are fed into the reduction chamber (3).

4. The method according to any of the preceding claims,
**characterized in that**
the chemical composition of the reduced slag is adjusted by adding slag modifiers into the reduction chamber (3) such that the solidified slag after tapping can be supplied to the further processing as hydraulic binder, the contents of calcium, aluminum and silicon being adjusted in such a way that hydraulic calcium aluminates, calcium silicates and calcium aluminate silicates are formed.

5. The method according to any of the preceding claims,
**characterized in that**
a carbon-containing reagent is introduced into the reduction chamber (3), with the option that the carbon-containing reagent is pulverulent or gaseous or is a mixture of pulverulent and gaseous reducing agents.

6. The method according to any of the preceding claims,
**characterized in that**
the carbon-containing reducing agent is injected to an overstoichiometric extent.

7. The method according to any of the preceding claims,
**characterized in that**,
if required, energy is introduced into the reduction chamber (3) by means of electrodes via electric arcs.

8. The method according to any of the preceding claims,
**characterized in that**,
when the reduction of the mineral slag product is completed, a lateral tapping is carried out, while the resulting metal product is tapped in molten form into the oxidation chamber (4), with solid oxygen carriers being added to the molten metal product in the oxidation chamber (4), such as iron oxides from smelting residues or ores for temperature control, preferably solid LD slag being added in addition, in which the phosphorus absorption capacity has not yet been utilized.

9. The method according to any of the preceding claims,
**characterized in that**
the temperature in the forehearth (2) is set to a range between 1,450°C and 1,550°C and the temperatures in the reduction chamber (3) are set to > 1,600°C, and in the oxidation chamber (4) the temperature is set to 1,450°C to 1,550°C.

10. A device for treating metallurgical slags,
**characterized in that**
the device (1) for treating metallurgical slags comprises a forehearth (2), a reduction chamber (3) and an oxidation chamber (4), the forehearth (2), the reduction chamber (3) and the oxidation chamber (4) forming a structural unit, and the chambers being separated from one another,
wherein controllable shut-off devices (5, 6, 7) are arranged between the chambers, wherein first controllable shut-off devices (5) are provided between the reduction chamber (3) and the oxidation chamber (4) and second shut-off devices (6) are provided between the reduction chamber (3) and the oxidation chamber (4), with the forehearth (2), the reduction chamber (3) and the oxidation chamber (4) being provided with the shut-off members (5, 6, 7) such that these are arranged outside the chamber space.

11. The device according to claim 10,
**characterized in that**
at least one chamber, preferably all chambers (2, 3, 4), is/are provided with an inductive slag detection.

12. The device according to claim 10 or 11,
**characterized in that**
the forehearth (2) and the oxidation chamber (4) have heating burners for burning the high-calorific gas from the reduction stage, with the option that natural gas burners and/or so-called virtual lance burners are additionally present.

13. The device according to any of claims 10 to 12,
**characterized in that**
the forehearth (2), the reduction chamber (3) and the oxidation chamber (4) have different sizes, wherein the forehearth (2) is larger, preferably 3 to 10 times larger, than the reduction chamber (3), and the reduction chamber (3) is larger than the oxidation chamber (4).

14. The device according to any of claims 10 to 13,
**characterized in that**
the melt base (8) of the forehearth (2) and/or the melt base (9) of the reduction chamber (3) and/or the melt base (10) of the oxidation chamber (4) are formed to be inclined, the inclination sloping towards an outlet-side or tap-side end, in particular at 2-5° or more, wherein a height difference exists between the forehearth (2) and the reduction chamber (3) and the oxidation chamber (4) such that the melt base (8) of the forehearth (2) is higher than the melt base (9) of the reduction chamber (3) and the melt base (9) of the reduction chamber (3) is higher than the melt base (10) of the oxidation chamber (4).

15. The device according to any of claims 10 to 14,
**characterized in that**
heating gas lines (11, 12) are laid from the reduction chamber (3) to the forehearth (2) and to the oxidation chamber (4) and are connected to burners present there, optionally with the interposition of pressure transducers and/or mixing valves.

16. The device according to any of claims 10 to 15,
**characterized in that**
the reduction chamber (3) has, in addition to the controllable shut-off device (5) of the forehearth (2) and the controllable shut-off device (6) to the oxidation chamber (4), an additional tapping device with which reduced slag can be tapped laterally.

## Revendications

1. Procédé de traitement de laitiers métallurgiques, sachant qu'un dispositif (1) subdivisé en un avant-creuset (2), une chambre de réduction (3) et une chambre d'oxydation (4) est utilisé, sachant que du laitier liquide ainsi qu'éventuellement des agglomérats solides et de l'acier résiduel sont versés dans l'avant-creuset (2) et y sont maintenus à une température prédéterminée ou portés et maintenus à celle-ci et le laitier et l'acier résiduel sont laissés dans l'avant-creuset (2) jusqu'à ce que la chambre de réduction (3) soit prête à recevoir du matériau et ensuite du laitier et le cas échéant de l'acier résiduel sont transférés dans la chambre de réduction (3) et une réduction est effectuée dans la chambre de réduction (3), sachant que le laitier est traité avec un agent de réduction de sorte que des oxydes de métal soient réduits et s'accumulent comme fonte de métal au fond d'une sole à fonte (9) et le laitier réduit est soutiré après réduction effectuée et amené au traitement ultérieur comme liant hydraulique et la fonte de métal générée est amenée à la chambre d'oxydation (4) et pourvue d'agents d'oxydation dans la chambre d'oxydation (4) et oxydée pour enlever des métaux accessoires de la fonte de métal et les lier dans un laitier présent dans la chambre d'oxydation (4), sachant que la température dans l'avant-creuset (2) est réglée à plus de 1450 °C, une température de processus > 1500 °C est réglée et maintenue dans la chambre de réduction (3) pour assurer que l'acier résiduel entraîné reste à l'état d'agrégat liquide et que des agglomérations solides soient fondues, et la température dans la chambre d'oxydation est réglée à plus de 1450 °C, sachant qu'un bain de laitier résiduel, du laitier réduit resté sur une fonte de métal résiduel qui se trouve dans la chambre de réduction (3), subsiste dans la chambre de réduction (3) et n'est pas soutiré et le laitier LD provenant de l'avant-creuset (2) est incorporé au laitier réduit dans la chambre de réduction (3) pour empêcher des réactions entre le laitier riche en oxydes de fer et le bain de métal riche en carbone dans la chambre de réduction.

2. Procédé selon la revendication 1,
**caractérisé en ce que**
l'avant-creuset (2) est chauffé avec du gaz à fort pouvoir calorifique provenant de l'étage de réduction, sachant qu'un apport d'énergie via des brûleurs dits brûleurs VLB est effectué si nécessaire pour fondre sûrement des composants solides introduits.

3. Procédé selon l'une des revendications précédentes,
**caractérisé en ce que**
des modificateurs de laitier, comme p. ex. du sable de quartz, de l'oxyde d'aluminium et des résidus appropriés provenant de l'industrie métallurgique, comme p. ex. des scories d'aluminium, sont adjoints dans la chambre de réduction (3).

4. Procédé selon l'une des revendications précédentes,
**caractérisé en ce que**
la composition chimique du laitier réduit est réglée par ajout de modificateurs de laitier dans la chambre de réduction (3) de telle sorte que le laitier solidifié puisse être amené au traitement ultérieur comme liant hydraulique après le soutirage, sachant que les teneurs en calcium, aluminium et silicium sont réglées de telle sorte que des aluminates de calcium, silicates de calcium et silicates d'aluminate de calcium hydrauliques se forment.

5. Procédé selon l'une des revendications précédentes,
**caractérisé en ce qu'**un agent de réaction comportant du carbone est introduit dans la chambre de réaction (3), sachant que l'agent de réduction comportant du carbone peut être sous forme de poudre ou de gaz ou est un mélange d'agents de réduction sous forme de poudre et de gaz.

6. Procédé selon l'une des revendications précédentes,
**caractérisé en ce que**
l'agent de réduction comportant du carbone est insufflé dans une proportion suprastœchiométrique.

7. Procédé selon l'une des revendications précédentes,
**caractérisé en ce que**
de l'énergie est introduite au besoin dans la chambre de réduction (3) par arc électrique via des électrodes.

8. Procédé selon l'une des revendications précédentes,
**caractérisé en ce que**
après l'achèvement de la réduction du produit de laitier minéral, un soutirage latéral est effectué tandis que le produit métallique résultant est soutiré sous forme liquide en fusion vers la chambre d'oxydation (4), sachant que des supports d'oxygène solides sont adjoints au produit métallique liquide en fusion dans la chambre d'oxydation (4), comme des oxydes de fer provenant de résidus sidérurgiques ou des minerais pour le contrôle de température, sachant que de préférence du laitier LD solide pour lequel la capacité d'absorption de phosphate n'est pas encore épuisée est en outre ajouté.

9. Procédé selon l'une des revendications précédentes,
**caractérisé en ce que**
la température dans l'avant-creuset (2) est réglée à une plage entre 1450 °C et 1550 °C et les températures dans la chambre de réduction (3) sont réglées à > 1600 °C, et la température dans la chambre d'oxydation (4) est réglée à une plage entre 1450 °C et 1550 °C.

10. Dispositif de traitement de laitiers métallurgiques,
**caractérisé en ce que**
le dispositif (1) de traitement de laitiers métallurgiques comprend un avant-creuset (2), une chambre de réduction (3) et une chambre d'oxydation (4), sachant que l'avant-creuset (2), la chambre de réduction (3) et la chambre d'oxydation (4) forment une unité structurelle et les chambres sont séparées l'une de l'autre,
sachant que des dispositifs d'isolement (5, 6, 7) réglables sont disposés entre les chambres, sachant que des premiers dispositifs d'isolement (5) réglables sont présents entre la chambre de réduction (3) et la chambre d'oxydation (4) et des deuxièmes dispositifs d'isolement (6) sont présents entre la chambre de réduction (3) et la chambre d'oxydation (4), sachant que l'avant-creuset (2), la chambre de réduction (3) et la chambre d'oxydation (4) comprennent les organes d'isolement (5, 6, 7) de telle manière que ceux-ci soient disposés à l'extérieur de l'espace de chambre.

11. Dispositif selon la revendication 10,
**caractérisé en ce que**
au moins une chambre, de préférence toutes les chambres (2, 3, 4) disposent d'une détection inductive de laitier.

12. Dispositif selon la revendication 10 ou 11,
**caractérisé en ce que**
l'avant-creuset (2) et la chambre d'oxydation (4) comprennent des brûleurs de chauffe pour brûler le gaz à fort pouvoir calorifique provenant de l'étage de réduction, sachant que des brûleurs à gaz naturel et/ou des brûleurs dits Virtual Lance Burners peuvent en outre être présents.

13. Dispositif selon l'une des revendications 10 à 12,
**caractérisé en ce que**
l'avant-creuset (2), la chambre de réduction (3) et la chambre d'oxydation (4) présentent des dimensions différentes, sachant que l'avant-creuset (2) est plus grand, de préférence 3 à 10 fois plus grand que la chambre de réduction (3), et la chambre de réduction (3) est plus grande que la chambre d'oxydation (4).

14. Dispositif selon l'une des revendications 10 à 13,
**caractérisé en ce que**
la sole à fonte (8) de l'avant-creuset (2) et/ou la sole à fonte (9) de la chambre de réduction (3) et/ou la sole à fonte (10) de la chambre d'oxydation (4) sont constituées de manière inclinée, sachant que l'inclinaison descend vers une extrémité côté sortie ou côté soutirage, en particulier de 2-5° ou plus, sachant qu'une différence de hauteur entre l'avant-creuset (2) et la chambre de réduction (3) et la chambre d'oxydation (4) existe de telle manière que la sole à fonte (8) de l'avant-creuset (2) soit disposée plus haut que la sole à fonte (9) de la chambre de réduction (3) et la fonte à sole (9) de la chambre de réduction (3) soit disposée plus haut que la sole à fonte (10) de la chambre d'oxydation (4).

15. Dispositif selon l'une des revendications 10 à 14,
**caractérisé en ce que**
des conduites de gaz de chauffe (11, 12) sont menées à l'avant-creuset (2) et à la chambre d'oxydation (4) depuis la chambre de réduction (3) et sont reliées à des brûleurs qui s'y trouvent, des convertisseurs de pression et/ou des robinets mélangeurs étant intercalés le cas échéant.

16. Dispositif selon l'une des revendications 10 à 15,
**caractérisé en ce que**
la chambre de réduction (3) comprend, en plus du dispositif d'isolement (5) réglable depuis l'avant-creuset (2) et du dispositif d'isolement (6) réglable vers la chambre d'oxydation (4), un dispositif de soutirage supplémentaire avec lequel du laitier réduit peut être soutiré latéralement.
